**Europäisches Patentamt**

**European Patent Office**

**Office européen des brevets**

(19)

(11) Numéro de publication: **0 032 341**
**B1**

(12) **FASCICULE DE BREVET EUROPEEN**

(45) Date de publication du fascicule du brevet:
**23.11.83**

(21) Numéro de dépôt: **80401856.2**

(22) Date de dépôt: **23.12.80**

(51) Int. Cl.³: **B 01 D 1/18,** B 01 D 1/20,
C 01 G 43/01, C 01 F 15/00,
C 01 G 56/00, B 05 B 7/10

(54) Dispositif d'atomisation d'un mélange réactionnel.

(30) Priorité: **09.01.80 FR 8000392**

(43) Date de publication de la demande:
**22.07.81 Bulletin 81/29**

(45) Mention de la délivrance du brevet:
**23.11.83 Bulletin 83/47**

(84) Etats contractants désignés:
**BE DE GB IT**

(56) Documents cités:
**DE - A - 2 407 616**
**FR - A - 1 272 073**
**FR - A - 2 281 777**
**FR - A - 2 370 695**
**US - A - 4 134 547**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Goumondy, JeaN Pierre, 172, rue Julian**
**Grimau, F-94400 Vitry sur Seine (FR)**
Inventeur: **Hanssens, Alain, Tour B - No 74 - Les**
**Escanaux, F-30200 Bagnols sur Ceze (FR)**

(74) Mandataire: **Mongrédien, André et al, c/o**
**BREVATOME 25, rue de Ponthieu, F-75008 Paris (FR)**

Dispositif d'atomisation d'un mélange réactionnel

La présente invention concerne un dispositif d'atomisation d'un mélange réactionnel, permettant d'obtenir un solide sous forme pulvérulente à partir d'un jet de solution.

Ce dispositif d'atomisation est utilisé, en particulier, pour la mise en oeuvre d'un procédé de préparation direct des oxydes fissiles, tels que l'oxyde d'uranium ou l'oxyde de thorium, à partir d'une solution du nitrate correspondant. La solution de nitrate, mélangée à de l'acide formique, constitue le mélange réactionnel. Ce mélange réactionnel est chauffé jusqu'à la décomposition du nitrate. Cette décomposition thermique conduit directement à la formation de l'oxyde correspondant sous forme de poudre. Pour obtenir de plus amples renseignements sur ce procédé de fabrication, on peut se référer, par exemple, au brevet FR-A-2 088 170 déposé le 25 mai 1970 par le Commissariat à l'Energie Atomique et intitulé «Procédé de fabrication d'oxydes fissiles et dispositif de mises en oeuvre de ce procédé».

Le mélange réactionnel décrit ci-dessus est injecté dans un réacteur au moyen d'une base d'atomisation et d'un gaz chaud, en général de l'air. Ce mélange réactionnel atomisé tombe dans un four porté à plus ou moins haute température.

Lorsque l'on cherche à augmenter la capacité du dispositif et donc le débit de la soution de nitrate, l'angle du jet d'atomisation à la sortie de la buse s'accroît et le liquide, constitué du mélange réactionnel, vient au contact de la paroi du four. On observe alors un dépôt solide qui conduit à un encrassement important, notamment dans la partie supérieure du dispositif. Ce phénomène s'intensifie avec l'accroissement du débit traité. Cet encrassement entraîne un nettoyage fréquent du dispositif, donc un démontage fréquent de celui-ci. Ces inconvénients sont gênants pour l'utilisation en continu du dispositif.

La présente invention a pour objet de remédier à ces inconvénients et notamment d'éviter l'encrassement du dispositif, ce qui permet d'augmenter la capacité de celui-ci et son utilisation en continu.

La présente invention a donc pour objet un dispositif d'atomisation d'un mélange réactionnel.

Ce dispositif permettant la pulvérisation dudit mélange dans un réacteur à l'aide d'au moins un premier gaz et d'une buse d'atomisation et comprenant une alimentation en un deuxième gaz chaud, situé au sommet du dispositif d'atomisation, ou atomiseur, servant au séchage du mélange atomisé, une alimentation en un troisième gaz et des moyens de distribution de ce troisième gaz, se caractérise en ce que lesdits moyens de distribution comprennent un passage annulaire de largeur réglable et permettent de distribuer dans le réacteur ledit troisième gaz sous la forme d'une couronne, le long de la paroi interne du réacteur et de haut en bas de ladite paroi, de façon à éviter tout contact entre le mélange réactionnel et ladite paroi. Les différents gaz utilisés sont constitués de préférence par de l'air.

Selon un mode préféré de réalisation de ce dispositif, les moyens de distribution du troisième gaz comprennent deux pièces métalliques fixes, une pièce supérieure et une pièce inférieure, concentriques, solidaires l'une de l'autre et du reste du dispositif et une troisième pièce mobile, concentrique, pouvant se déplacer entre les deux pièces précédentes de façon à faire varier la largeur du passage annulaire. Le déplacement de la troisième pièce se fait verticalement et est commandé de l'extérieur du dispositif à l'aide de moyens appropriés.

D'autres caractéristiques et avantages de l'invention ressortiront mieux à l'aide de la description qui va suivre, donnée à titre purement illustratif et non limitatif, en référence aux figures annexées dans lesquelles:

la figure 1 représente un schéma général du dispositif d'atomisation selon l'invention,

la figure 2 représente schématiquement une première variante du dispositif d'atomisation de la figure 1,

la figure 3 représente une deuxième variante du dispositif d'atomisation de la figure 1,

la figure 4 représente schématiquement un dispositif utilisant le dispositif d'atomisation de la figure 1.

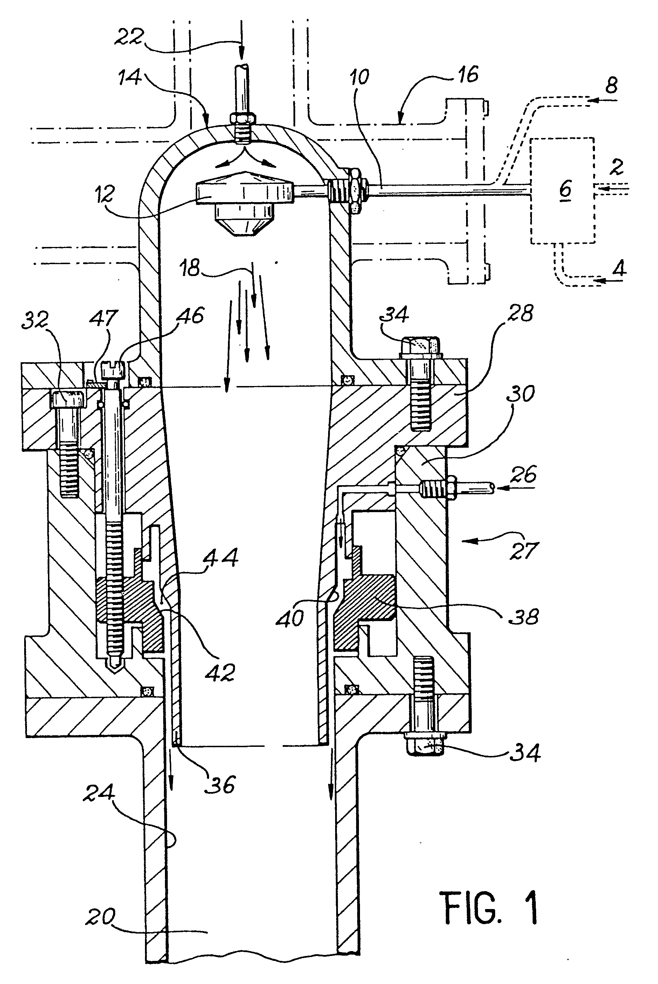

La figure 1 représente un dispositif d'atomisation d'un mélange réactionnel selon l'invention. Les solutions, constituant le mélange réactionnel, amenées par des conduites 2 et 4 sont filtrées au moyen d'un filtre 6 avant de pénétrer dans l'atomiseur. Suivant la composition du mélange réactionnel, le temps de contact entre les différentes solutions peut être variable. Dans le cas particulier d'une solution de nitrate de plutonium et d'une solution d'acide formique, les solutions peuvent être injectées directement dans le filtre 6, comme représenté sur la figure 1. Dans le cas d'une solution de nitrate de thorium et d'une solution d'acide formique, les solutions doivent être mises en contact plusieurs minutes avant l'entrée dans le filtre 6. Dans ce dernier cas particulier, le mélange réactionnel est préchauffé dans un préréacteur à une température d'environ 60°C, non représenté sur le schéma. Un premier gaz en général de l'air chaud à environ 250°C arrive dans l'atomiseur par une conduite 8. Cet air chaud ainsi que le mélange réactionnel sont amenés au moyen d'une conduite 10 à une buse d'atomisation 12.

Le dispositif d'atomisation, ou atomiseur, peut présenter différentes formes, en particulier une forme arrondie 14 ou une forme en croix 16. De préférence, on utilisera l'atomiseur sous forme arrondie 14 de façon à limiter les turbulences au niveau de jet d'atomisation 18.

Le mélange réactionnel, sous forme liquide, est divisé sous forme d'un brouillard constitué de fines gouttelettes, et tombe dans un four vertical 20. Au sommet de l'atomiseur par une conduite 22 arrive un deuxième gaz tel que de l'air chaud entre 300°C et 350°C, permettant le séchage des fines gouttelettes du mélange réactionnel sous forme de fines particules, par exemple d'oxyde. Pour éviter le dépôt de ces particules sur la paroi interne 24 du four 20, on envoie, conformément à l'invention, par une voie 26, un troisième gaz tel que de l'air chaud à environ 250°C qui est distribué par des moyens appropriés 27 sous la forme d'une couronne continue le long de la paroi interne 24 du four 20 et de haut en bas de ladite paroi, de façon à confiner dynamiquement le jet d'atomisation 18.

Les moyens de distribution 27 de ce troisième gaz comprennent deux pièces métalliques fixes 28 et 30 solidaires l'une de l'autre au moyen de vis telles que 32. La pièce supérieure 28 de ces moyens de distribution 27 est solidaire de l'atomiseur 14 ou 16 au moyen de vis telles que 34. De même, la pièce inférieure 30 desdits moyens est solidaire du four vertical 20 au moyen de vis telles que 34. La pièce supérieure 28 comprend une partie effilée 36, dirigée vers le bas et descendant plus bas que la pièce inférieure 30. Cette partie effilée 36 permet d'éviter des turbulences au niveau de la sortie du troisième gaz chaud qui permet le confinement dynamique du jet d'atomisation 18. Une troisième pièce 38 peut se déplacer verticalement entre les pièces 28 et 30. La pièce supérieure 28 comprend sur le côté interne, dans sa partie centrale, un décrochement incliné 40 et la troisième pièce mobile 38 comprend sur son côté externe un décrochement incliné 42 identique au décrochement 40 et situé en regard de celui-ci. Ces deux décrochements définissent un passage annulaire 44, compris entre la pièce supérieure 28 fixe et la troisième pièce 38, dont la largeur peut varier lorsque cette dernière se déplace de haut en bas. La possibilité de faire varier la largeur du passage annulaire 44 entre la pièce 28 et la pièce 38 permet de modifier le débit du troisième gaz arrivant en 26. La largeur de ce passage annulaire 44 peut varier de 0 à 0,5 mm. Les moyens permettant le déplacement de la troisième pièce 38, verticalement, sont constitués, par exemple, par au moins trois vis micrométriques sans fin telles que 46, traversant de part en part la pièce 28 et passant dans un logement taraudé spécialement dans la pièce 38. Ces vis 46 sont maintenues en place au moyen de languettes telles que 47, vissées dans la pièce 28.

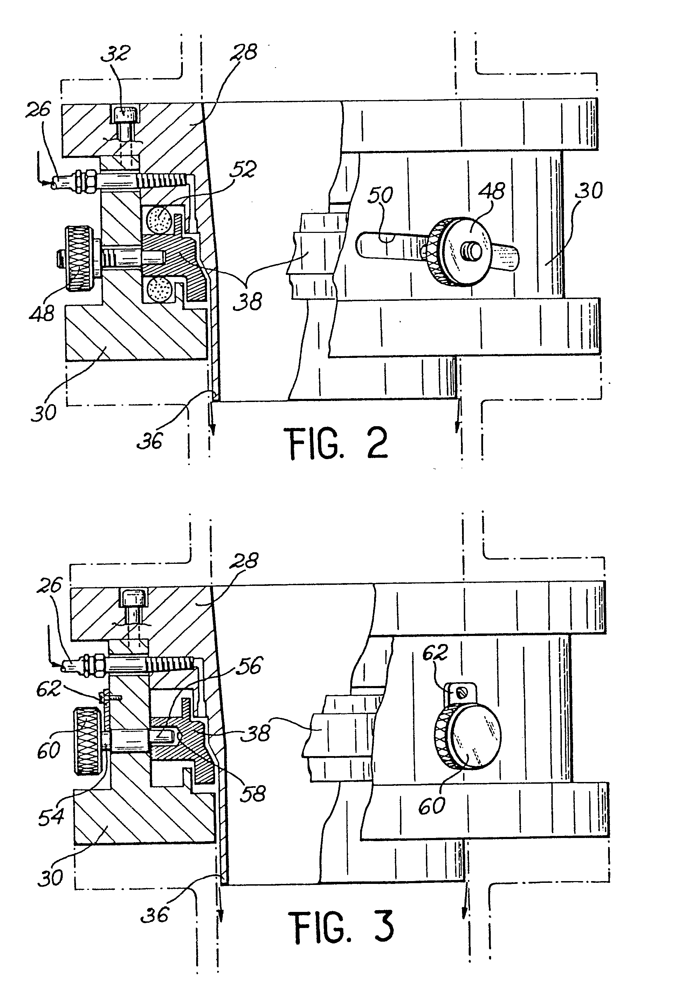

La figure 2 représente une variante des moyens permettant le déplacement de la troisième pièce 38. Ces moyens sont constitués d'au moins trois manettes telles que 48 solidaires de la pièce 38. Chacune de ces manettes 48 peut se déplacer dans une fenêtre telle que 50 de forme allongée et légèrement oblique, effectuée dans la pièce inférieure 30 au niveau de sa partie centrale. Dans cette variante, conformément à l'invention, ont été adjoints deux joints toriques, tels que 52, entre la pièce mobile 38 et les pièces fixes 28 et 30; ces joints 52 jouant le rôle de soufflets.

La figure 3 représente schématiquement une autre variante selon l'invention, des moyens permettant le déplacement de la troisième pièce 38 verticalement entre la pièce 28 et la pièce 30. Ces moyens sont constitués d'au moins trois tiges telles que 54, comprenant à l'une de leurs extrémités un excentrique 56 venant se loger dans une gorge 58 effectuée dans la troisième pièce 38. A l'autre extrémité de la tige 54 se trouve une pièce 60, par exemple un bouton moleté, permettant de faire tourner manuellement la tige 54 dans un sens ou dans l'autre. Ces tiges 54 traversant la pièce inférieure 30 dans sa partie centrale, sont maintenues en place au moyen d'une languette 62 vissée dans la pièce inférieure 30.

Les différents moyens permettant le déplacement de la pièce 38 sont équidistants les uns des autres. Dans le cas de trois éléments (tiges, manettes, ou vis micrométriques), l'angle compris entre chacun d'eux est de 120°, dans le cas de quatre éléments, l'angle n'est plus que de 90°.

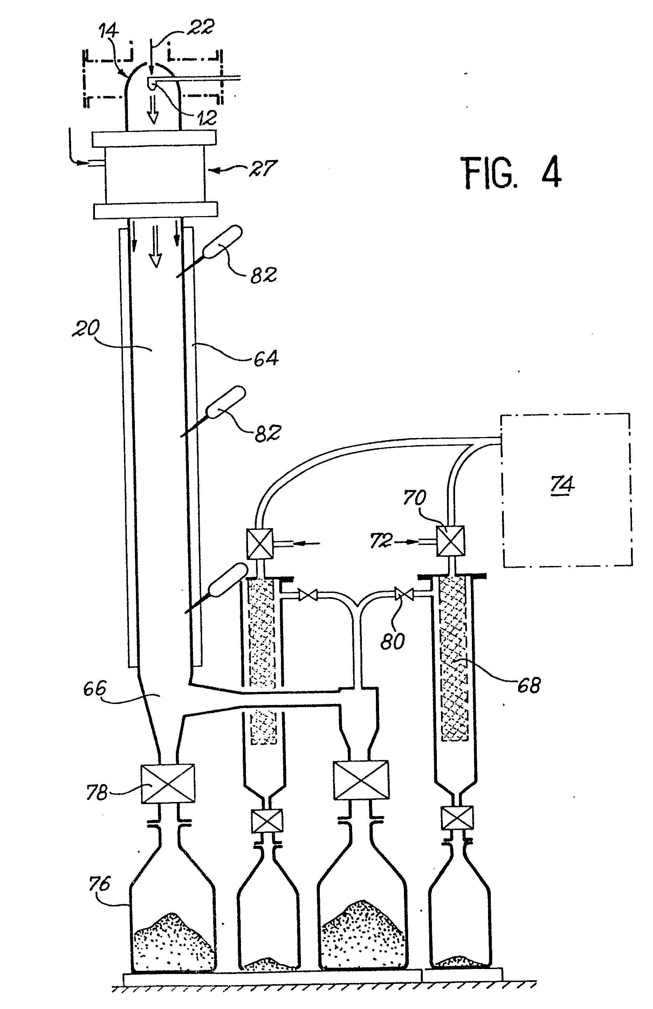

La figure 4 représente schématiquement un dispositif dans lequel on utilise un dispositif d'atomisation 14 ou 16, et conformément à l'invention des moyens de distribution 27 du troisième gaz tel que décrit précédemment. Le mélange réactionnel atomisé au moyen de la buse d'atomisation 12 est divisé sous forme d'un brouillard de fines gouttelettes qui tombe dans un four vertical 20 chauffé par des résistances électriques telles que 64 placées tout le long de la paroi du four 20. Les fines gouttelettes de mélange réactionnel sont séchées, au moyen du deuxième gaz chaud arrivant en 22, sous forme de fines particules, par exemple d'oxyde. A la base du four 20, ces particules, ou grains sont séparés des gaz à l'aide d'une batterie de cyclones 66 suivie de filtres tels que 68, constitués par exemple en acier inoxydable fritté de faible porosité (environ 3μ). Afin d'éviter le colmatage irréversible des filtres 68, on a adapté un dispositif de décolmatage périodique 70 qui, par envoi d'air comprimé chaud par une entrée 72, à contre-courant à travers le filtre 68 permet un auto-nettoyage permanent. Les gaz filtrés au moyen du filtre 68 sont ensuite lavés à l'aide d'un dispositif tel que 74 avant rejet de ces gaz dans l'atmosphère. Ce dispositif de lavage 74 comprend une colonne de lavage à l'eau pour recombiner les vapeurs nitreuses, puis une colonne d'épuration de lavage à la soude. Ce dispositif de lavage 74, de type connu, n'a pas été détaillé et ne sera pas décrit ultérieurement. Les grains obtenus, lors de la réaction chimique dans le four 20, sont récupérés dans des containers tels que 76 munis de vannes 78. Le filtrage des gaz au moyen des filtres 68 et le décolmatage de ces filtres au moyen du dispositif 70 sont pratiqués en alternance d'un côté puis de l'autre. Les vannes 80 permettent le fonctionnement en alternance. Pendant que les gaz traversent l'un des filtres, l'autre est décolmaté. Les références 82 représentent des sondes de températures disposées à distance égale l'une de l'autre tout le long du four 20.

Le dispositif d'atomisation décrit précédemment présente un certain nombre d'avantages.

Il permet, grâce au confinement dynamique du jet d'atomisation au moyen d'un troisième gaz tel qu'un courant d'air chaud distribué sous la forme d'une couronne continue à l'aide des moyens de distribution de ce troisième gaz, de limiter l'encrassement de la partie supérieure du four, en évitant le contact direct du mélange réactionnel avec la paroi interne du four. Ceci permet de plus, d'améliorer l'échange thermique entre le gaz chaud, en général de l'air, et le mélange réactionnel, ce qui permet d'augmenter la capacité d'évaporation du dispositif.

De plus, l'utilisation d'un passage annulaire réglable permet d'augmenter le débit du mélange réactionnel. Dans le dispositif initial, non muni du dispositif de distribution d'air, on ne pouvait dépasser un débit de mélange réactionnel de 15 l/h. Au delà, on observait un encrassement important qui imposait un nettoyage fréquent du dispositif. Avec ce dispositif, on a pu augmenter le débit du mélange réactionnel jusqu'à 40 l/h, c'est-à-dire plusque doubler la capacité du dispositif. Le réglage du débit d'air servant au confinement dynamique du jet d'atomisation, grâce au passage de largeur variable, dépend du débit que l'on désire obtenir pour le mélange réactionnel.

Bien entendu, l'utilisation d'un tel dispositif ne se limite pas à l'obtention d'oxydes fissiles à partir de la solution de nitrate correspondant, mais peut s'appliquer en général à tout procédé d'obtention d'un solide sous forme pulvérulente à partir d'un jet de solution.

**Revendications**

1. Dispositif d'atomisation d'un mélange réactionnel permettant la pulvérisation dudit mélange dans un réacteur ou four vertical (20) à l'aide d'au moins un premier gaz, errivant par une conduite (8) et d'une buse d'atomisation (12) et comprenant une conduite d'alimentation en un deuxième gaz chaud (22) située au sommet du dispositif d'atomisation (14 ou 16), servant au séchage du mélange atomisé, une alimentation en un troisième gaz par une voie (26) et des moyens de distribution (27) de ce troisième gaz, caractérisé en ce que lesdits moyens de distribution comprennent un passage annulaire de largeur réglable (44) et permettent de distribuer dans le four vertical (20) ledit troisième gaz sous la forme d'une couronne, le long de la paroi interne (24) du four vertical (20) et de haut en bas de ladite paroi, de façon à éviter tout contact entre le mélange réactionnel et ladite paroi.

2. Dispositif d'atomisation selon la revendication 1, caractérisé en ce que les différents gaz utilisés sont constitués par de l'air.

3. Dispositif d'atomisation selon l'une quelconque des revendications 1 et 2, caractérisé en ce que les moyens de distribution (27) comprennent deux pièces métalliques fixes, une pièce supérieure (28) et une pièce inférieure (30) concentriques, solidaires l'une de l'autre et du reste du dispositif et, une troisième pièce mobile (38) concentrique pouvant se déplacer entre les deux pièces précédentes (28 et 30) de façon à faire varier la largeur du passage annulaire (44).

4. Dispositif d'atomisation selon la revendication 3, caractérisé en ce que le déplacement de la troisième pièce (38) se fait verticalement, et est commandé de l'extérieur du dispositif d'atomisation à l'aide de moyens appropriés.

5. Dispositif d'atomisation selon l'une quelconque des revendications 3 et 4, caractérisé en ce que le passage annulaire (44) est défini au moyen d'un décrochement incliné (40) situé sur le côté interne de la partie centrale de la pièce supérieure (28) et d'un décrochement incliné (42), identique au décrochement (40) de cette dernière, situé sur le côté externe de la troisième pièce (38).

6. Dispositif d'atomisation selon l'une quelconque des revendications 4 et 5, caractérisé en ce que les moyens permettant le déplacement de la troisième pièce (38) sont constitués d'au moins trois manettes (48) solidaires de ladite pièce, équidistantes les unes des autres, chacune de ces manettes pouvant se déplacer dans une fenêtre (50) allongée et légèrement oblique effectuée dans la pièce inférieure (30) au niveau de sa partie centrale.

7. Dispositif d'atomisation selon l'une quelconque des revendications 4 et 5, caractérisé en ce que les moyens permettant le déplacement de la troisième pièce (38) sont constitués d'au moins trois tiges (54) comprenant à l'une de leurs extrémités un excentrique (56) venant se loger dans une gorge (58) effectuée dans la troisième pièce (38) et à l'autre extrémité une pièce (60) permettant de faire tourner la tige manuellement dans un sens ou dans l'autre, ces tiges traversant la pièce inférieure (30) dans sa partie centrale sont maintenues en place au moyen d'une languette (62) vissée dans la pièce inférieure (30) et équidistantes les unes des autres.

8. Dispositif d'atomisation selon l'une quelconque des revendications 4 et 5, caractérisé en ce que les moyens permettant le déplacement de la troisième pièce (38) sont constitués d'au moins trois vis micrométriques sans fin (46) passant dans un logement taraudé spécialement dans la troisième pièce (38), ces vis (46) traversant de part en part la pièce supérieure (28) sont équidistantes les unes des autres et sont maintenues en place au moyen d'une languette (47) vissée dans la pièce supérieure (28).

9. Dispositif d'atomisation selon la revendication 6, caractérisé en ce que deux joints toriques (52) jouant le rôle de soufflet, sont placés entre la troisième pièce mobile (38) et les deux autres pièces fixes (28 et 30).

10. Dispositif d'atomisation selon l'une quelconque des revendications 3 à 9, caractérisé en ce que la pièce supérieure comprend une partie effilée (36) dirigée vers le bas et descendant plus bas que la pièce inférieure (30).

**Claims**

1. Atomizing device of a reactive mixture enabling atomization of said mixture in a vertical reactor or furnace (20), by means of at least one first gas fed through conduit (8) and an atomizing nozzle (12), and comprising a feed conduit for a second hot gas (22) located at the top of the atomizing device (14 or 16), acting to dry the atomized mixture, means for feeding a third gas from duct (26), and distribution means (27) for the third gas, characterized in that said distribution means comprise an annular passage (44) of adjustable width enabling the third gas to be distributed in the vertical furnace (20) in the form of an annular curtain extending the length of the internal wall (24) from top to bottom of the vertical furnace (20), whereby to avoid all contact between the reactive mixture and said wall.

2. Atomizing device according to Claim 1 characterized in that the different gases employed are air.

3. Atomizing device according to either of Claims 1 and 2 characterized in that the distribution means (27) comprise two fixed concentric metallic mem

bers, an upper member (28) and a lower member (30), fixed to one another and to the remainder of the device, and a third mobile concentric member (38) displaceable between the two aforementioned members (28 and 30) whereby to vary the width of the annular passage (44).

4. Atomizing device according to Claim 3 characterized in that displacement of the third member (38) is conducted vertically, and is controlled by appropriate means from outside the atomizing device.

5. Atomizing device according to either of Claims 3 and 4 characterized in that the annular passage (44) is defined by means of an inclined step (40) on the internal face of the central part of the upper member (28), and an inclined step (42), identical to step (40) of the latter, located on the external face of the third member (38).

6. Atomizing device according to either of Claims 4 and 5 characterized in that the means enabling displacement of the third member (38) comprise at least three handles (48) fixed to said member, equidistant from one another, each of the handles being displaceable in a slightly oblique elongated window (50), formed in the lower member (30) at the level of its central part.

7. Atomizing device according to either of Claims 4 and 5 characterized in that the means enabling displacement of the third member (38) comprise at least three rods (54) equidistant from one another and having at one of their ends an eccentric member (56) lodged in a groove (58) formed in the third member (38) and having at the other end a member (60) enabling manual rotation of the rod in one sense or the other, said rods passing through the central part of the lower member (30), being held in place by means of a tongue (62) screwed to the lower member.

8. Atomizing device according to either of Claims 4 and 5 characterized in that the means enabling displacement of the third member comprise at least three endless micrometer screws (46) equidistant from one another and passing through a specially tapped housing in the third member (38), said screws passing through the upper member (28) and being held in place by means of a tongue (47) screwed to the upper member (28).

9. Atomizing device according to Claim 6 characterized in that two toroidal gaskets (52) acting as a bellows are placed between the third mobile member (38) and the two other fixed members (28 and 30).

10. Atomizing device according to any one of Claims 3 to 9 characterized in that the upper member comprises a downwardly directed tapered portion (36) extending lower than the lower member (30).

## Patentansprüche

1. Vorrichtung zum Zerstäuben eines Reaktionsgemisches, mit der dieses Gemisch in einem Rekator oder Turmofen (20) mit Hilfe von wenigstens einem ersten, durch eine Leitung (8) ankommenden Gas und einer Zerstäubungsdüse (12) zerstäubt werden kann, wobei vorgesehen sind eine oben in der Zerstäubungsvorrichtung (14 oder 16) angeordnete Versorgungsleitung für ein warmes, zweites Gas (22), welches zum Trocknen der zerstäubten Gemisches dient, eine Versorgung mit einem dritten Gas über einen Weg (26) und Mittel (27) zum Verteilen dieses dritten Gases, dadurch gekennzeichnet, dass die Mittel zum Verteilen einen ringförmigen Durchlass (44) mit einstellbarer Weite umfassen und erlauben, das dritte Gas in dem Turmofen (20) in der Form eines Ringes längs der Innenwand (24) des Turmofens (20) und von oben nach unten dieser Wand derart zu verteilen, dass jegliche Berührung zwischen dem Reaktionsgemisch und der Wand vermieden wird.

2. Vorrichtung zum Zerstäuben nach Anspruch 1, dadurch gekennzeichnet, dass die verschiedenen, verwandten Gase von Luft gebildet sind.

3. Vorrichtung zum Zerstäuben nach einem der Ansprüche 1 oder 2, dadurch gekennzeichnet, dass die Mittel (27) zum Verteilen zwei stationäre Teile aus Metall und zwar ein oberes Teil (28) und ein unteres Teil (30), die konzentrisch und fest miteinander und der übrigen Vorrichtung verbunden sind, und ein drittes, konzentrisches, bewegbares Teil (38) umfassen, das zwischen den zwei vorgenannten Teilen (28 und 30) derart verschiebbar ist, dass die Weite des ringförmigen Durchlasses (44) verändert wird.

4. Vorrichtung zum Zerstäuben nach Anspruch 3, dadurch gekennzeichnet, dass die Verschiebung des dritten Teiles (38) in vertikaler Richtung erfolgt und von ausserhalb der Vorrichtung zum Zerstäuben mittels geeigneter Mittel steuerbar ist.

5. Vorrichtung zum Zerstäuben nach Anspruch 3 oder 4, dadurch gekennzeichnet, dass der ringförmige Durchlass (44) mittels eines sich auf der Innenseite des mittleren Abschnittes des oberen Teils (28) befindenden, schrägen Absatzes und eines schrägen Absatzes (42) festgelegt ist, welcher mit dem Absatz (40) des letzteren identisch ist und sich auf der äusseren Seite des dritten Teils (38) befindet.

6. Vorrichtung zum Zerstäuben nach Anspruch 4 oder 5, dadurch gekennzeichnet, dass die die Verschiebung des dritten Teils (38) erlaubenden Mittel von wenigstens drei Handhaben (48) gebildet sind, welche mit diesem Teil fest verbunden und voneinander gleich beabstandet sind, wobei jede dieser Handhaben in einem länglichen und leicht schräg verlaufenden Fenster (50) verschiebbar ist, welches in dem unteren Teil (30) auf der Höhe seines mittleren Abschnittes ausgebildet ist.

7. Vorrichtung zum Zerstäuben nach Anspruch 4 oder 5, dadurch gekennzeichnet, dass die die Verschiebung des dritten Teils (38) erlaubenden Mittel von wenigstens drei Stangen (54) gebildet sind, die an einem ihrer Enden einen Exzenter (56), der von einer in dem dritten Teil (38) ausgebildeten Nut (58) aufgenommen ist, und am anderen Ende ein Teil (60) aufweisen, welches ermöglicht, die Stange von Hand in beiden Richtungen zu drehen, und dass diese Stangen das untere Teil (30) in seinem mittleren Abschnitt durchqueren und in ihrer Lage mittels einer an dem unteren Teil angeschraubten Zunge (62) gehalten sind und voneinander gleich beabstandet sind.

8. Vorrichtung zum Zerstäuben nach einem der Ansprüche 4 oder 5, dadurch gekennzeichnet, dass die die Verschiebung des dritten Teils (38) erlaubenden Mittel von wenigstens drei Mikrometerschrauben (46) ohne Ende gebildet sind, die durch eine extra mit einem Gewinde versehene Aufnahme in dem dritten Teil (38) hindurchgehen, und dass diese Schrauben (46) das obere Teil (28) vollständig durchqueren und voneinander gleich beabstandet sind und in ihrer Lage mittels einer an dem oberen Teil (28) angeschraubten Zunge (47) gehalten sind.

9. Vorrichtung zum Zerstäuben nach Anspruch 6, dadurch gekennzeichnet, dass zwei torusförmige Dichtungen (52), die die Rolle eines Balgen spielen, zwischen dem dritten, bewegbaren Teil (38) und den zwei anderen, stationären Teilen (28 und 30) angeordnet sind.

10. Vorrichtung zum Zerstäuben nach einem der Ansprüche 3 bis 9, dadurch gekennzeichnet, dass das obere Teil einen sich verjüngenden Abschnitt (36) aufweist, der nach unten gerichtet ist und tiefer als das untere Teil (30) herabreicht.

FIG. 1

FIG. 2

FIG. 3

FIG. 4